# EUROPÄISCHE PATENTSCHRIFT

(11) **EP 2 504 598 B1**
(45) Veröffentlichungstag und Bekanntmachung des Hinweises auf die Patenterteilung: **13.11.2013**
(21) Anmeldenummer: 11810576.6
(22) Anmeldetag: 20.12.2011
(51) Int. Cl.: F16D 43/204

(54) **SICHERHEITSKUPPLUNG**
SAFETY COUPLING
EMBRAYAGE DE SÉCURITÉ

(30) Priorität: 18.01.2011 DE 102011008872
(43) Veröffentlichungstag der Anmeldung: 03.10.2012
(73) Patentinhaber: R+W Antriebselemente GmbH, 63911 Klingenberg (DE)
(72) Erfinder: RIMPEL, Andreas, 63933 Mönchberg (DE)
(74) Vertreter: Säger, Manfred
(86) Internationale Anmeldenummer: PCT/EP2011/006430
(87) Internationale Veröffentlichungsnummer: WO 2012/097847

(56) Entgegenhaltungen:
- EP-A1- 0 082 039
- DE-B- 1 101 059
- GB-A- 2 370 077
- US-A- 2 511 518

## Beschreibung

Die Erfindung betrifft eine gattungsgemässe Sicherheitskupplung nach dem Oberbegriff des Hauptanspruchs, nämlich eine bei Überschreiten eines einstellbaren Überlastdrehmomentes bei Überlast aus einer Antriebslage in einen Freilauf auskuppelnde Sicherheitskupplung, mit einem um eine Drehachse drehbaren treibenden Flansch und einem um dieselbe Drehachse drehbaren angetriebenen Kupplungsteil, wobei der Flansch auf einem Lochkreis Ausnehmungen und das Kupplungsteil in der Antriebslage Rastkugeln in die Ausnehmungen unter der Federkraft hineindrückende, eine drehfeste Verbindung zwischen dem Flansch und dem Kupplungsteil bewirkende und bei Überschreiten des Überlastdrehmoments die Freigabe der drehfesten Verbindung unter Auskuppeln in den Freilauf bewirkende Halteeinrichtungen nebst einem Gehäuse aufweist, wobei jeder Rastkugel eine einzige Halteeinrichtung zugeordnet ist und sich die Rastkugel von der Antriebslage entgegen der Federkraft aus der Ausnehmung in den Freilauf herausbewegt und an einem längs eines Gehäuses der Halteeinrichtung geführten Stössel angeordnet ist, der eine die Federkraft erzeugende Feder aufweist.

Sicherheitskupplungen dieser Art sind in einer Vielzahl von Ausführungsformen bekannt (DE 41 20 107 A1, DE 197 39 469 A1, DE 11 01 059 B, DE 101 43 583 B4 und DE 10 2006 050 995 A1) und haben sich bewährt. Dabei können der Lochkreis auf der ebenen Stirnseite oder dem Mantel des Flansches vorgesehen werden und die Rasteinrichtungen entweder als einfache federbelastete Rastkugeln, oder auch als mehrere am Unfang verteilt angeordnete Stössel, ggf. mit einer vorderen Rastkugel als sogenannte Schaltsegmente ausgebildet sein, die formschlüssig in eine auf dem Flansch vorgesehenen Kalotte als Ausnehmung mittels der Kraft der Feder eingedrückt sind. Bei Überlast bewegen sich die Rastkugeln in Umfangsrichtung und zugleich in axialer Richtung entgegen der Kraft der Feder aus der Kalotte und bewirken als Halteeirichtung ein andauerndes Auskuppeln bis zum mauellen Wieder-Einkuppeln der Sicherheitskupplung, weil sie reibungs- und/oder formschlüssig in dieser Stellung von Sperrsegmenten gehalten verbleiben, wobei im Freilauf der Stössel an seinem freien Ende über das Gehäuse hinausragt.

Zum Wiedereinkuppeln muss der Stössel wieder in seine Antriebslage gebracht werden. Das geschieht in praxi mit einem Schlag eines Kunststoffhammers auf das freie, aus dem Gehäuse herausragende Ende des Stössel zu dessen Lösen. Dabei ist aber zusätzlich darauf zu achten, dass sich der Stössel bzw. dessen Rastkugeln gegenüber der Ausnehmung befindet, weil nur so die der Freilauf beendet und die Antriebslage wieder eingenommen werden kann.

Der Erfindung liegt die Aufgabe zugrunde, eine gattungsgemässe Sicherheitskupplung nach dem Oberbegriff des Hauptanspruchs so weiter auszugestalten, dass sie nach dem Auskuppeln bei Überlast zwar sicher den Freilauf beibehält, aber zusätzlich und in leicht und einfacher Art und Weise wieder in die Antriebslage einkuppelbar ist.

Diese Aufgabe wird bei einer gattungsgemässen Sicherheitskupplung nach dem Oberbegriff des Hauptanspruchs erfindungsgemäss durch dessen kennzeichnende Merkmale, also dadurch gelöst, dass der Stössel einen zwei Zylinderräume voneinander trennenden hydraulischen Kolben von seiner der Antriebslage entsprechenden Ruhelage in eine dem Freilauf entsprechende Haltelage unter Verdrängung von Hydraulikflüssigkeit von dem einen Zylinderraum über zumindest eine wenigstens ein zu diesem hin öffnendes (und zu dem anderen Zylinderraum hin schliessendes) Rückschlagventil aufweisende Verbindung in den anderen Zylinderraum bewegt. Zum Wiedereinkuppeln muss nur das Rückschlagventil hydaulisch überbrückt oder kurzgeschlossen werden. Dann kann die wegen des unter Federkraft stehenden Kolbens in dem einen Zylinderraum einen Überdruck aufweisende Hydraulikflüssigkeit über die Verbindung in den anderen Zylinderaum strömen, wobei der Kolben den Stössel und damit die Rastkugel wieder in deren Ausnehmung drücken kann, wodurch die Antriebslage der Sicherheitskupplung wieder hergestellt ist.

Mit dem Vorteil der einfachsten Steuerung weist die zumindest eine Verbindung von dem einen zu dem anderen Zylinderraum noch ein Zweiwege-Zweipositions-Ventil (2/2-Ventil) auf, das in seiner einen Schaltstellung das Fliessen der Hydraulikflüssigkeit in den anderen Zylinderraum sperrt und in seiner manuell zu bewirkenden anderen Schaltstellung die beiden Zylinderräume miteinander verbindet. So lässt sich der Kolben in seiner Haltelage in einfachster Weise durch Öffnen der hydraulischen Verbindung zwischen den beiden Zylinderräumen in seine der Antriebslage der Sicherheitskupplung entsprechenden Ruhelage bringen.

Bei Überlast wird bei der erfindungsgemässen Sicherheitskupplung das Ausrasten von der Antriebslage in den Freilauf wie auch beim gattungsgemässen Stand der Technik zuverlässig gewährleistet. Dabei wird der sich zwischen den beiden Zylinderräumen befindende Kolben von seiner Ruhelage durch den Stössel verschoben, wodurch der Kolben bei seiner Bewegung in Richtung zu dem anderen Zylinderraum Hydraulikflüssigkeit verdrängt. Deren Verdrängung von dem anderen in den einen Zylinderraum erfolgt über die die beiden Zylinderräume verbindende Verbindung, was wegen des zu dem einen Zylinderraum hin öffnenden Rückschlagventils ermöglicht wird. Zugleich verhindert dieses Rückschlageventil auch, dass der entgegen der Federkraft gespannte Kolben sich wieder in die Ruhelage bewegen kann, weil hierzu ein Fliessen der Hydraulikflüssigkeit in umgekehrter Richtung notwendig wäre, was durch das in dieser Richtung sperrende Rückschlagventil verhindert wird, so dass der Kolben in seiner Haltelage aufgrund der hydraulischen Wirkungen gehalten verbleibt. Im Gegensatz zum gattungsgemässen Stand der Technik genügt es für das Wiedereinkuppeln in die Antriebslage, wieder eine Verbindung zwischen den beiden Zylinderräumen zu schaffen. Das geschieht beispielsweise durch mechanisches Öffnen des Rückschlagventils oder durch einen zu diesem parallel geschalteten und zu öffenden Bypass. Im Übrigen ist die Implementierung der Erfindung nicht auf rotatorisch arbeitende Systeme wie Kupplungen beschränkt. Sie kann vielmehr auch Einsatz bei linearen Antrieben z.B. Zahnstangen und dgl. finden.

Mit der Erfindung lässt sich also eine leicht durch einen hydraulischen Schalter aus dem Freilauf in die Antriebslage wiedereinkuppelnde Sicherheitskupplung bereitstellen. Das Wiedereinrasten kann dabei in einfachster Weise manuell oder auch selbsttätig, z.B. durch Betätigung eines hydraulischen Ventils gesteuert erfolgen.

Besonders einfach gestaltet sich die erfindungsgemässe Sicherheitskupplung, wenn das 2/2-Ventil in seinem einen Weg der einen Schaltstellung das zu dem einen Zylinderraum hin öffnende und zu dem anderen Zylinderraum hin schliessende Rückschlagventil und in seinem anderen Weg der anderen Schaltstellung einen die beiden Zylinderräume miteinander verbindenden Durchgang aufweist.

Wenn die zumindest eine Verbindung als die beiden Zylinderräume verbindende Öffnungen des Kolbens ausgebildet ist und wenn das Rückschlagventil in einer die beiden Zylinderräume verbindenden Öffnung des Kolbens vorgesehen ist, kann es wegen der nicht vorhandenen langen Strömungswege besonders hydraulisch reibungsarm ausgestaltet werden. Zusätzlich kann schnell ein grosses Volumen dann verdrängt werden, wenn das wenigstens eine Rückschlagventil als die Öffnung von einer Seite verschliessende Ventilplatte ausgebildet ist, die von einer Andrückfeder in Richtung auf den Kolben gedrückt wird.

Weitere zweckmässige Ausgestaltungen und Weiterbildungen der Erfindung sind in den Unteransprüchen gekennzeichnet.

Ausführungsbeispiele werden nachfolgend unter Bezugnahme auf die Zeichnung näher erläutert. In dieser zeigt:
- Figur 1: eine erste Ausführungsform der Sicherheitskupplung mit den funktionalen Teilen, in Antriebslage und im schematischen Schnitt;
- Figur 2: eine zweite Ausführungsform der Sicherheitskupplung, in Antriebslage und im schematischen Schnitt;
- Figur 3: die Sicherheitskupplung gemäss Fig.1, im Freilauf und im schematischen Schnitt;
- Figur 4: die Sicherheitskupplung gemäss Fig.2, im Freilauf und im schematischen Schnitt;
- Figur 5: die Sicherheitskupplung gemäss Fig.1, im grösserem Massstab und
- Figur 6: die Sicherheitskupplung gemäss Fig.2, im grösserem Massstab.

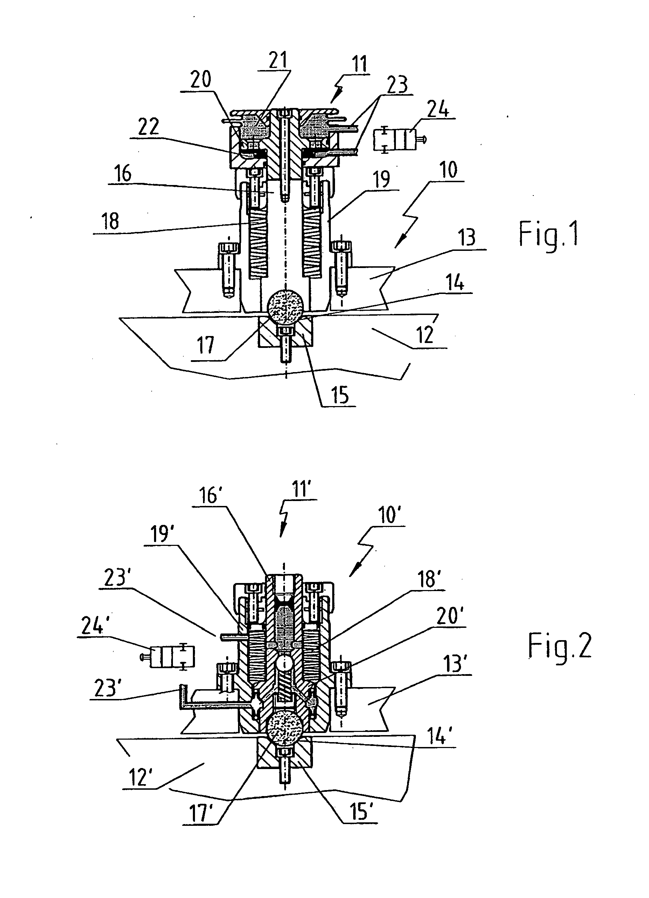

Es ist in Figur 1 ein Ausschnitt einer ersten Ausführungsform einer bei Überschreiten eines einstellbaren Überlastdrehmomentes bei Überlast aus einer Antriebslage auskuppelnde Sicherheitskupplung 10 mit einem Schaltsegment 11 als Rasteirichtung dargestellt. Sie weist einen um eine Drehachse drehbaren treibenden Flansch 12 und ein um dieselbe Drehachse drehbaren angetriebenen Kupplungsteil 13 auf. Die beiden Teile 12, 13 werden, wie gezeigt, in der drehfesten Verbindung gehalten, und zwar von dem als Halteeinrichtung dienenden Schaltsegment 11. Diese ist als an dem Kupplungsteil 13 festgelegter Stössel 16 mit einer Rastkugel 17 an seinem vorderen Ende ausgebildet, die unter der Kraft einer Feder 18 steht.

Der Flansch 12 weist gleichmässig an Umfang eines Lochkreises verteilte Ausnehmungen 14 an einem eingesetzten Ring bzw. Einrastringflansch 15 auf, in die die Rastkugel 17 des Stössels 16 der Rasteinrichtung 11 mit der Kraft der Feder 16 eingepresst wird.

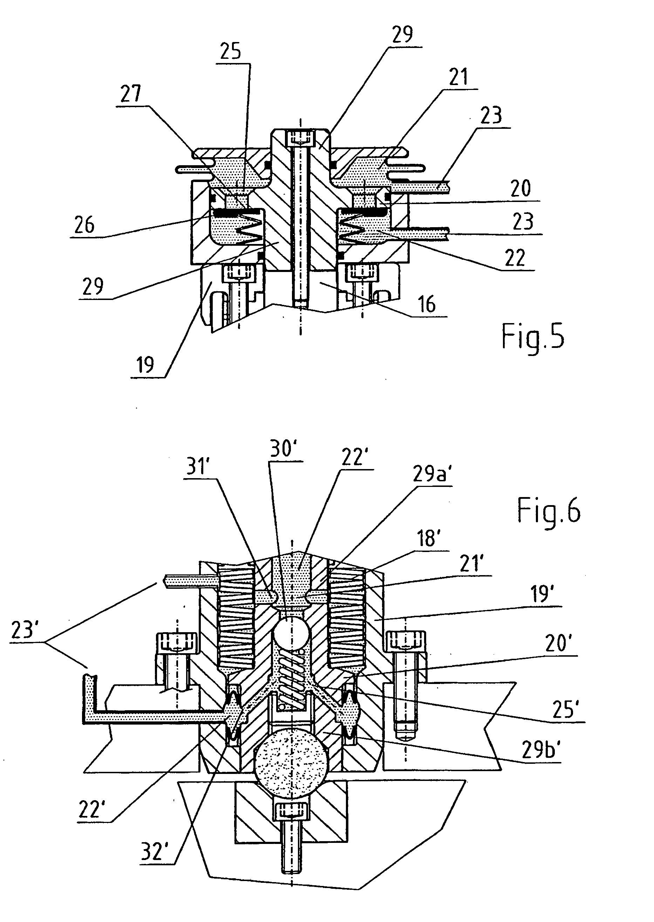

Auf den Stössel 16 ist an dessen freiem Ende ein zwei (hydraulische) Zylinderräume 21,22 voneinander trennender Kolben 20 angeschraubt, die über zumindest eine Verbindung 23 miteinander verbunden sind. Diese verbindende Leitung weist noch ein zweiwege-Zweipositions-Ventil (2/2-Ventil) 24 auf, das in seiner einen Schaltstellung das Fliessen der Hydraulikflüssigkeit in den anderen Zylinderraum sperrt und in seiner manuell zu bewirkenden anderen Schaltstellung die beiden Zylinderräume 21,22 miteinander verbindet. Dieser Teil ist in Figur 5 näher dargestellt. Wie daraus entnehmbar, ist das zumindest eine Rückschlagventil in wenigstens einer die beiden Zylinderräume verbindenden Öffnung 25 des Kolbens 20 vorgesehen. Es ist als die Öffnung 25 von einer Seite verschliessende Ventilplatte 26 ausgebildet, die von einer Andrückfeder 18 in Richtung auf den Kolben 20 gedrückt wird, an den sich zwei Kolbenstangen 29 in jeden Zylinderraum 21,22 anschliessen. Es ist aber auch eine Ausführungsform mit nur einer Kolbenstange möglich.

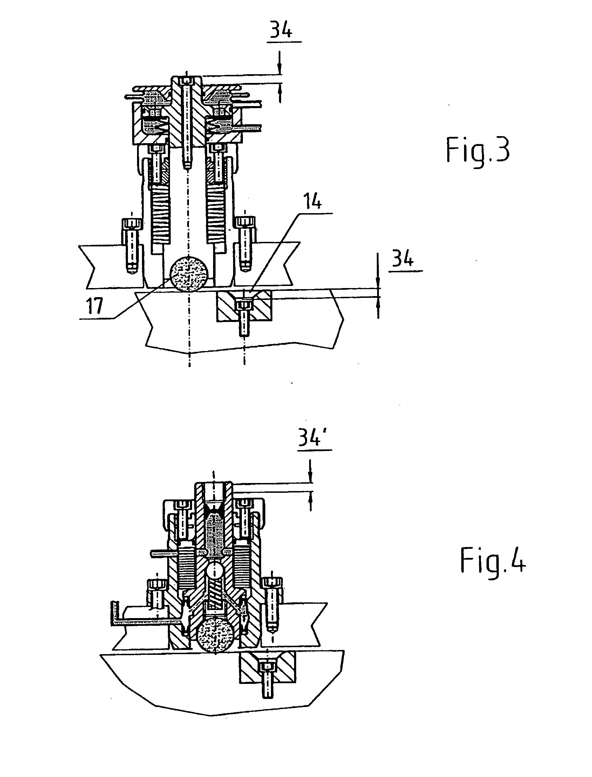

Bei Überschreiten des Überlastdrehmoments wird die Freigabe der drehfesten Verbindung durch das Auskuppeln in den Freilauf durch die Halteeinrichtungen bewirkt, die ein Gehäuse 19 aufweist, wobei jeder Rastkugel 17 genau eine einzige Halteeinrichtung zugeordnet ist und sich die Rastkugel 17 von der Antriebslage entgegen der Kraft der Feder aus der Ausnehmung 14 in den Freilauf herausbewegt. Dabei wird der längs des Gehäuses 19 der Halteeinrichtung geführte Stössel 16 entgegen der Federkraft (in der Zeichnung nach oben) um den Schaltweg 34 bewegt und kommt, wie in Figur 3 gezeigt, frei.

Dabei bewegt der Stössel 16 den die zwei Zylinderräume 21, 22 voneinander trennenden hydraulischen 20 Kolben von seiner der Antriebslage entsprechenden Ruhelage in eine dem Freilauf entsprechende Haltelage unter Verdrängung von Hydraulikflüssigkeit von dem einen Zylinderraum 21 über die das zu diesem hin öffnende (und zu dem anderen Zylinderraum 22 hin schliessende) Rückschlagventil 26,27 aufweisende Verbindung 23 in den anderen Zylinderraum 22. Wegen des Rückschlageventils 26,27 kann die Hydraulikflüssigkeit nicht von dort (22) in den einen Zylinderraum 21 fliessen, wenn das Zweiwege-Zweipositions-Ventil (2/2-Ventil) 24 sich in seiner einen Schaltstellung befindet, die das Fliessen der Hydraulikflüssigkeit in den anderen Zylinderraum 22 sperrt.

Die in den Figuren 1, 3 und 5 gezeigte erste Ausführungsform ist zur Nachrüstung von bestehenden Sicherheitskupplungen geeignet. Demgegenüber ist die in den Figuren 2, 4 und 6 gezeigte zweite Ausführungsform mit integrierter Halteeinrichtung kompakter aufgebaut. Alle identischen und gleich wirkenden Teile sind mit demselben Bezugszeichen gekennzeichnet, das allerdings zur Unterscheidung mit einem ' versehen ist. Wärend bei der ersten Ausführungsorm die Durchmesser beider Zylinderräume und die in jedem Zylinderraum befindliche Kolbenstange des einzigen Kolbens jeweils gleich gross bemessen sind, was bei der Verdrängung von Hydraulikflüssigkeit aus dem einen Zylinderraum dazu führt, dass derselbe Rauminhalt in dem anderen Zylinderraum frei wird zur Aufnahme genau der verdrängten Hydraulikflüssigkeit, ist das bei der zweiten Ausführungsform nicht so, weshalb dort ein Ausgleichsbehälter mit gepufferter Hydraulikflüssigkeit vorgesehen sein muss.

In Figur 6 ist die zweite Ausführungsform näher dargestellt. Ersichtlich ist auch dort der Kolben 20' mit einer als Öffnungen 25' ausgebildeten Verbindung, zusätzlich zu der über eine äussere Leitung verlaufenden Leitung 23' versehen. Dabei sind weiter der Stössel und der Kolben einstückig unter Bildung einer Einheit 29a' ,29b' mit je einer Kolbenstange 29a' und 29b' in den beiden Zylinderräumen 21',22' ausgebildet, wobei die eine Kolbenstange 29a' von der die Federkraft erzeugenden Feder 18' umgeben ist, die sich in dem einen Zylinderraum 21' befindet.

Ausserdem ist die zumindest eine Verbindung als die beiden Zylinderräume 29a' und 29b' verbindender Kanal 31' ,32' im Inneren der Einheit 29a',29b' ausgebildet und das wenigstens eine Rückschlagventil 30' in dem Kanal vorgesehen.

Der Kanal 31' ,32' weist der Einheit 29a' ,29b' eine in dem einen Zylinderraum mündende Querbohrung 31' auf und ist zwischen dieser und dem Kanal zu dem anderen Zylinderraum 22' das wenigstens eine Rückschlagventil 30' vorgesehen.

## Patentansprüche

1. Bei Überschreiten eines einstellbaren Überlastdrehmomentes bei Überlast aus einer Antriebslage in einen Freilauf auskuppelnde Sicherheitskupplung, mit einem um eine Drehachse drehbaren treibenden Flansch (12) und einem um dieselbe Drehachse drehbaren angetriebenen Kupplungsteil (13), wobei der Flansch (12) auf einem Lochkreis Ausnehmungen (14) und das Kupplungsteil (13) in der Antriebslage Rastkugeln (17) in die Ausnehmungen unter der Federkraft hineindrückende, eine drehfeste. Verbindung zwischen dem Flansch und dem Kupplungsteil bewirkende und bei Überschreiten des Überlastdrehmoments die Freigabe der drehfesten Verbindung unter Auskuppeln in den Freilauf bewirkende Halteeinrichtungen nebst einem Gehäuse (19) aufweist, wobei jeder Rastkugel (17) eine einzige Halteeinrichtung zugeordnet ist und sich die Rastkugel von der Antriebslage entgegen der Federkraft aus der Ausnehmung (14) in den Freilauf herausbewegt und an einem längs eines Gehäuses der Halteeinrichtung geführten Stössel (16) angeordnet ist, der eine die Federkraft erzeugende Feder (18) aufweist, **dadurch gekennzeichnet, dass** der Stössel (16) einen zwei Zylinderräume (21,22) voneinander trennenden hydraulischen Kolben (20) von seiner der Antriebslage entsprechenden Ruhelage in eine dem Freilauf entsprechende Haltelage unter Verdrängung von Hydraulikflüssigkeit von dem einen Zylinderraum (21) über zumindest eine wenigstens ein zu diesem hin öffnendes (und zu dem anderen Zylinderraum (22) hin schliessendes) Rückschlagventil (26,27;30') aufweisende Verbindung (23;25;31';32') in den anderen Zylinderraum (22) bewegt und dass die zumindest eine Verbindung (23;25;31';32') von dem einen zu dem anderen Zylinderraum noch ein Zweiwege-Zweipositions-Ventil -2/2-Ventil- (24) aufweist, das in seiner einen Schaltstellung das Fliessen der Hydraulikflüssigkeit in den anderen Zylinderraum (22) sperrt und in seiner manuell zu bewirkenden anderen Schaltstellung die beiden Zylinderräume (21,22) miteinander verbindet.

2. Sicherheitskupplung nach Anspruch 1, **dadurch gekennzeichnet, dass** das 2/2-Ventil (24) in seinem einen Weg in seiner einen Schaltstellung das zu dem einen Zylinderraum (21) hin öffnende und zu dem anderen Zylinderraum (22) hin schliessende Rückschlagventil aufweist.

3. Sicherheitskupplung nach Anspruch 2, **dadurch gekennzeichnet, dass** das 2/2-Ventil (24) in seinem anderen Weg in seiner anderen Schaltstellung einen die beiden Zylinderräume (21,22) miteinander verbindenden Durchgang aufweist.

4. Sicherheitskupplung nach einem der vorhergehenden Ansprüche, **dadurch gekennzeichnet, dass** die zumindest eine Verbindung (23;25;31';32') als die beiden Zylinderräume (21,22) verbindende Öffnungen (25) des Kolbens (20) ausgebildet ist und dass das wenigstens eine Rückschlagventil (26,27') an den Öffnungen (25) vorgesehen ist.

5. Sicherheitskupplung nach Anspruch 4, **dadurch gekennzeichnet, dass** das wenigstens eine Rückschlagventil (26,27') als die Öffnungen (25) von einer Seite verschliessende Ventilplatte (26) ausgebildet ist, die von einer Andrückfeder (28) in Richtung auf den Kolben (20) gedrückt wird.

6. Sicherheitskupplung nach einem der vorhergehenden Ansprüche, **dadurch gekennzeichnet, dass** der Stössel (16') und der Kolben (20') einstückig unter Bildung einer Einheit ausgebildet sind und dass die eine Kolbenstange (29a') von der die Federkraft erzeugenden Feder (18') umgeben ist, die sich in dem einen Zylinderraum (21') befindet.

7. Sicherheitskupplung nach Anspruch 6, **dadurch gekennzeichnet, dass** die Einheit (29a',29b') mit je einer Kolbenstange in den Zylinderräumen (21',22') ausgebildet ist.

8. Sicherheitskupplung nach Anspruch 6 oder 7, **dadurch gekennzeichnet, dass** die zumindest eine Verbindung als die beiden Zylinderräume (21',22') verbindender Kanal (31',32') im Inneren der Einheit (29a',29b') ausgebildet ist und dass das wenigstens eine Rückschlagventil (30') in dem Kanal (31',32') vorgesehen ist.

9. Sicherheitskupplung nach Anspruch 7, **dadurch gekennzeichnet, dass** der Kanal der Einheit (29a',29b') eine in dem einen Zylinderraum (21') mündende Querbohrung (31') aufweist und dass zwischen dieser (31') und dem Kanal (31',32') zu dem anderen Zylinderraum (22') das wenigstens eine Rückschlagventil (30') vorgesehen ist.

## Claims

1. A safety coupling which, in the event of an overshooting of an adjustable overload torque in the case of an overload, decouples from a drive position into a free-wheeling state, with a driving flange (12) rotatable about an axis of rotation and a driven coupling part (13) rotatable about the same axis of rotation,
whereas the flange (12) provides recesses (14) in a circle of perforations, and, in the drive position, the coupling part (13) provides locking balls (17) pressing into the recesses subject to a spring force, holding devices together with a housing (19) which actuate a rotationally rigid connection between the flange and the coupling part and which, in the event of an overshooting of the overload torque, actuate the release of the rotationally rigid connection with a decoupling into the free-wheeling state, whereas an individual holding device is allocated to each locking ball (17), and the locking ball is moved from the drive position against the spring force out of the recess (14) into the free-wheeling state and arranged on a tappet (16) guided along a housing of the holding device, which provides a spring (18) generating the spring force, **characterised in that**
the tappet (16) moves a hydraulic piston (20), which separates two cylinder chambers (21, 22) from one another, from its resting position, which corresponds to the drive position, into a holding position, which corresponds to the free-wheeling state, thereby forcing hydraulic fluid from the one cylinder chamber (21) via at least one connection (23; 25; 31'; 32'), which provides at least one non-return valve (26, 27; 30') opening towards the latter (and closing towards the other cylinder chamber (22)), into the other cylinder chamber (22), and
that the at least one connection (23; 25; 31'; 32') also provides a two-way, two-position valve - 2/2-valve - (24) from the one cylinder chamber to the other, which, in its one switching position, blocks the flow of the hydraulic fluid into the other cylinder chamber (22), and, in its other switching position which can be actuated manually, connects the two cylinder chambers (21, 22) to one another.

2. The safety coupling according to claim 1,
**characterised in that,**
in its one way, in its one switching position, the 2/2 valve (24), provides the non-return valve opening towards the one cylinder chamber (21) and closing towards the other cylinder chamber (22).

3. The safety coupling according to claim 2,
**characterised in that,**
in its other way, in its other switching position, the 2/2-valve (24) provides a through passage connecting the two cylinder chambers (21, 22) to one another.

4. The safety coupling according to any one of the preceding claims,
**characterised in that**
the at least one connection (23; 25; 31'; 32') is embodied as openings (25) of the piston (20) connecting the two cylinder chambers (21, 22), and that the at least one non-return valve (26, 27') is provided in the openings (25).

5. The safety coupling according to claim 4,
**characterised in that**
the at least one non-return valve (26, 27') is embodied as the valve plate (26) closing the openings (25) from one side, which is pressed by a compression spring (28) in the direction towards the piston (20).

6. The safety coupling according to any one of the preceding claims,
**characterised in that**
the tappet (16') and the piston (20') is embodied in one piece forming a unit, and that the one piston rod (29a') is surrounded by the spring (18') generating the spring force, which is disposed in the one cylinder chamber (21').

7. The safety coupling according to claim 6,
**characterised in that**
the unit (29a', 29b') is embodied with a piston rod in each of the cylinder chambers (21', 22').

8. The safety coupling according to claim 6 or 7,
**characterised in that**
the at least one connection is embodied as a channel (31', 32') in the interior of the unit (29a', 29b') connecting the two cylinder chambers (21', 22'), and that the at least one non-return valve (30') is provided in the channel (31', 32').

9. The safety coupling according to claim 7,
**characterised in that**
the channel of the unit (29a', 29b') provides a transverse borehole (31') opening into the one cylinder chamber (21'), and that the at least one non-return valve (30') is provided between the latter (31') and the channel (31', 32') to the other cylinder chamber (22').

## Revendications

1. Accouplement de sécurité, désaccouplé d'une position d'entraînement en une position roue libre, en cas de dépassement d'un couple de surcharge réglable, comprenant une bride (12) entraînante et pouvant pivoter autour d'un axe de rotation, et un élément d'accouplement (13) entraîné de manière à pivoter autour de ce même axe de rotation, la bride (12) présentant, sur un cercle de trous, des évidements (14), et l'élément d'accouplement (13) présentant, en position d'entraînement, outre un carter (19), des dispositifs d'arrêt poussant des billes de détente (17) pouvant s'insérer, par pression, dans les évidements, sous l'effet de la force élastique et, de ce fait, provoquant une liaison de solidarisation en rotation entre la bride et l'élément d'accouplement, et provoquant, en cas de dépassement du couple de surcharge, la libération de la liaison de solidarisation en rotation, avec désaccouplement en fonction roue libre, un seul dispositif d'arrêt étant associé à chaque bille de détente (17), et la bille de détente se dégageant de la position d'entraînement, à l'encontre de la force élastique, de l'évidement (14) vers la position roue libre, et étant disposée sur un poussoir (16) guidé le long d'un carter du dispositif d'arrêt, ledit poussoir présentant un ressort (18) générant la force élastique, **caractérisé en ce que** le poussoir (16) présente un piston hydraulique (20) séparant l'un de l'autre deux volumes de cylindre (21, 22), se déplaçant de sa position de repos, correspondant à la position d'entraînement, vers une position d'arrêt correspondant à la fonction roue libre, avec refoulement de liquide hydraulique d'un des volumes de cylindre (21), via au moins une liaison (23 ; 25 ; 31' ; 32') présentant une soupape anti-retour (26, 27 ; 30') s'ouvrant vers ce volume de cylindre (et se fermant vers l'autre volume de cylindre (22)), vers l'autre volume de cylindre, et **en ce que** la ou les liaisons (23 ; 25 ; 31' ; 32') entre l'un et l'autre volume de cylindre présente encore une soupape à deux positions et à deux voies (24), qui, dans une de ses positions de commande, empêche l'écoulement du liquide hydraulique dans l'autre volume de cylindre (22) et, dans son autre position de commande, destinée à être mise en oeuvre manuellement, relie ensemble les deux espaces de volume (21, 22).

2. Accouplement de sécurité selon la revendication 1, **caractérisé en ce que** la soupape à deux positions et à deux voies (24) présente, dans une de ses voies, dans une de ses positions de commande, la soupape anti-retour s'ouvrant vers l'un des volumes de cylindre (21) et se fermant vers l'autre volume de cylindre (22).

3. Accouplement de sécurité selon la revendication 2, **caractérisé en ce que** la soupape à deux positions et à deux voies (24) présente, dans son autre voie, dans son autre position de commande, un passage reliant ensemble les deux volumes de cylindre (21, 22).

4. Accouplement de sécurité selon l'une des revendications précédentes, **caractérisé en ce que** la ou les liaisons (23 ; 25 ; 31' ; 32') sont conçues comme des ouvertures (25) du piston (20) reliant les deux volumes de cylindre (21, 22) et **en ce que** la ou les soupapes anti-retour (26, 27') sont agencées sur les ouvertures (25).

5. Accouplement de sécurité selon la revendication 4, **caractérisé en ce que** la ou les soupapes anti-retour (26, 27') sont conçues comme une plaque de soupape (26) fermant les ouvertures (25) d'une face, ladite plaque étant pressée par un ressort de pression (28) en direction du piston (20).

6. Accouplement de sécurité selon l'une quelconque des revendications précédentes, **caractérisé en ce que** le poussoir (16') et le piston (20') sont conçus en une seule pièce avec formation d'une unité et **en ce que** l'une des tiges de piston (29a') est entourée par le ressort (18') produisant la force élastique, ledit ressort se situant dans un des volumes de cylindre (21').

7. Accouplement de sécurité selon la revendication 6, **caractérisé en ce que** l'unité (29a', 29b') est pourvue respectivement d'une tige de piston dans les volumes de cylindre (21', 22').

8. Accouplement de sécurité selon la revendication 6 ou 7, **caractérisé en ce que** la ou les liaisons sont conçues comme un canal (31', 32') reliant les deux volumes de cylindre (21', 22') à l'intérieur de l'unité (29a', 29b') et **en ce que** la ou les soupapes anti-retour (30') sont agencées dans le canal (31', 32').

9. Accouplement de sécurité selon la revendication 7, **caractérisé en ce que** le canal de l'unité (29a', 29b') comprend un trou transversal (31') débouchant dans un des volumes de cylindre (21') et **en ce que** l'une des soupapes anti-retour (30') est agencée entre ledit trou transversal (31') et le canal (31', 32') menant à l'autre volume de cylindre (22').
